# EUROPEAN PATENT SPECIFICATION

(11) **EP 2 501 004 B1**
(45) Date of publication and mention of the grant of the patent: **12.03.2014**
(21) Application number: 12159370.1
(22) Date of filing: 14.03.2012
(51) Int. Cl.: H02G 3/30

(54) **Anchoring flange for conductions**
Verankerungsflansch fur Leiters
collet d'ancrage pour conducteurs

(30) Priority: 18.03.2011 ES 201130292 U
(43) Date of publication of application: 19.09.2012
(73) Proprietor: Unex Aparellaje Electrico S.L., 08903 L'Hospitalet de Llobregat (Barcelona) (ES)
(72) Inventor: Mostazo Oviedo, D. Jose Antonio, 08940 Cornellà de Llobregat (ES)
(74) Representative: Curell Suñol S.L.P.

(56) References cited:
- DE-U- 1 838 258
- ES-A6- 2 021 192

## Description

### Field of the invention

This invention relates to an anchoring flange for conductions, particularly a flange for anchoring electrical conductions carried on trays the bottom of which is grooved or formed by a grid, allowing the conductions to remain attached to the trays in any possible position thereof.

### State of the art

Where conductions are carried on perforated trays, which are either metal or plastic plates or grids, the conductions are attached to the tray by flexible tape wires or flanges, hook flanges or clamp flanges.

As for the wires with flexible flanges, a large number of variants exist.

As for the hook flanges, reference is made to documents ES2021192A6, ES1052347U, DE7120995U and DE29506234U, all of which disclose hook flanges made of metal material with a coupling arrangement to the tray shaped like a toothed L-shaped hook which, in order to catch on, must move inside a hole on the tray, normally a slot, until it reaches one end of it, after which the retention of said hook is determined by the grip of the L-shaped toothed hook and the stress of a pressure screw. Retention is not sufficient against stresses greater than the gripping strength of the toothed hook, and the situation of the toothed hook in the tray hole allows it to move in its uncoupling direction.

Also document EP0035526 is known, which discloses flanges that are applied specifically to hanging conductions.
DE 1838258 U shows an anchoring flange with inner pressing pressing part.

None of these known hook flanges can be considered secure in its function, as the attachment to the tray is subject to the effective grip of the toothed hook in said tray, without any end stop to prevent the hook from sliding in the presence of a greater stress and, with it, the release of the flange.

### Disclosure of the invention

In order to overcome said drawbacks and ensure that the flange is fixed in the tray hole, without any clearance in the interlock that allows the flange to be released, the solution has been adopted whereby the flange remains fixed in the hole of the tray in the transverse direction thereof, without the sliding of the flange along the tray anchoring holes, affecting the stability of the flange.

According to this solution, an anchoring flange for conductions has been developed, to anchor electrical conductions carried on trays the bottom of which is grooved or formed by a grid, **characterized in that** it is made by the association of one outer support part noticeably shaped like an inverted "U", which is provided along each of its two branches with a longitudinal opening that is closed at the bottom by a barbed tooth, with said two barbed teeth being opposite one another by their active obverse and projecting perpendicularly towards the inside of said outer support part, and an inner pressing part that is housed inside said outer support part, with said inner pressing part being also shaped like an inverted "U", made up of an arched head that is applied in a sliding manner via its wings to the inner walls of said branches of the outer support part, and of two branches that emerge in the centre of said wings and which have a suitable width and length for sliding under guidance through said longitudinal opening in the outer support part and, at the end of their trajectory through said longitudinal opening, for overlapping at their ends on the passive reverse side of said barbed teeth on the branches of the outer support part, with said outer support part being provided on its head with a threaded emerging bushing for the rotary passage of a spindle that activates said inner pressing part and which is applied in a releasable manner by its inner end to a cylindrical housing arranged in a transverse channel of said arched head of the inner pressing part.

Preferably, said outer support part and said inner pressing part are made from a synthetic plastic material that is an electricity insulator and resistant to ambient corrosion, and which allows a slight elastic deformation in said branches of, respectively, said outer support part and said inner pressing part, being made rigid with brackets both said head of the outer support part, with said brackets being arranged between said head and said threaded emerging bushing, and the intersection of the branches of said inner pressing part in the arched head of said inner pressing part.

Preferably, said spindle is made from synthetic plastic material and it is provided, on the outer end thereof, with driving means, and on its inner end, with some means for coupling to said inner pressing part.

Preferably, said spindle driving means are from the group comprising a diametral groove for receiving a screw driver and a prismatic hexagonal faceted element, considered either individually or in their possible technical combinations.

Preferably, said cylindrical housing, provided in the transverse channel of the arched head of the inner pressing part, and the inner end of said spindle have releasable mutual coupling means that allow said spindle to rotate and prevent it from separating accidentally from said cylindrical housing when it moves inversely to the pressing action.

In some embodiments, wherein the anchoring flange is applied to an electrical conductor carrying tray, the distance between the active obverses of said barbed teeth of the branches of the outer support part is equal to the smaller distance between two juxtaposed holes in said tray, and the width of said holes in the tray is equivalent to the sum of the thickness of the area preceding the barb of said barbed tooth and the thickness of the ends of the branches of said inner pressing part.

### Brief description of the drawings

To facilitate the understanding of the ideas exposed, disclosing several construction details, an embodiment of this invention is described below with reference to the accompanying drawings which, in view of their mainly illustrative purpose, must be interpreted as being without any limiting conditions regarding the amplitude of the main claim.
Figure 1 represents, in a top perspective view, an embodiment of the anchoring flange for conductions carried in trays that constitutes the object of the invention, which is in the open position for being applied to a conduction on a tray.
Figure 2 represents, in a top perspective view, the flange of the preceding figure, in a supposed position for attaching a conduction.
Figure 3 represents, in a front elevation view, the flange of Figure 1 located over a conduction to be fixed to the tray on which said conduction is arranged, in the position prior to anchoring.
Figure 4 represents, in a front elevation view, the flange of the preceding figure clamping the conduction, with the outer support part being coupled in the corresponding tray holes by means of the barbed teeth of said outer support part.
Figure 5 represents, in a front elevation view, the flange of the preceding figure wherein the inner pressing part has descended to overlap the ends of its branches on the reverse of the barbed teeth of the outer support part, occupying between them both branches the width of the corresponding tray holes.

### Detailed description of an embodiment of the invention

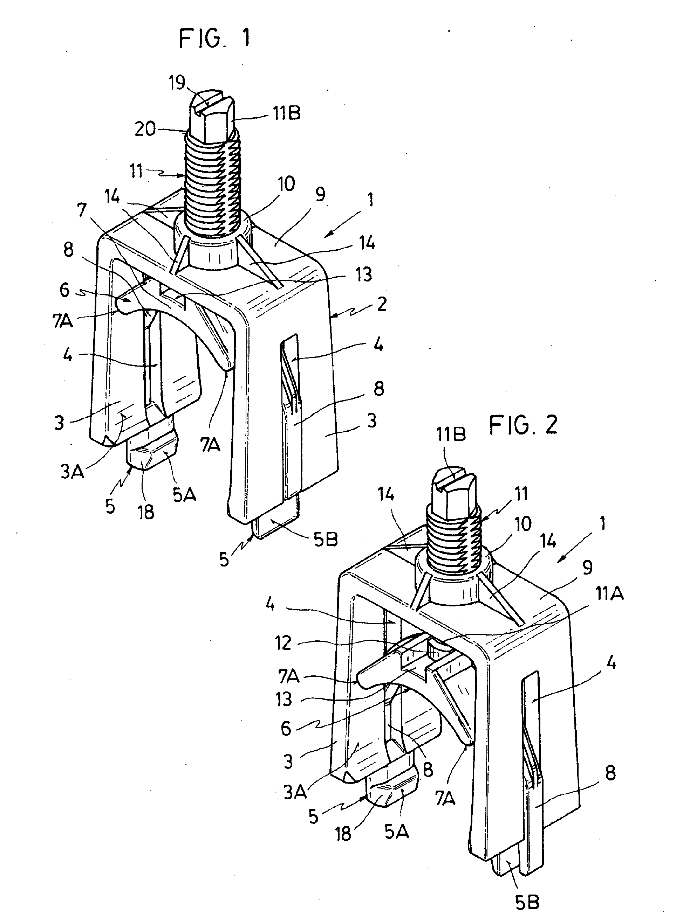

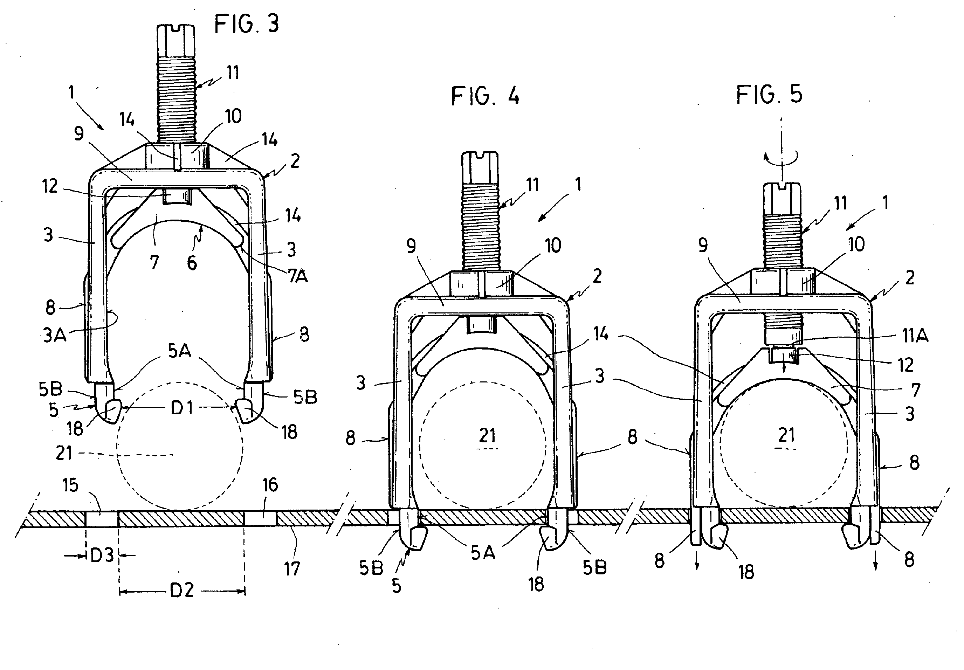

Figures 1, 2 and 3 show a preferred embodiment of the anchoring flange 1 of conductions in a tray that has been illustrated in sectioned fragments in Figures 3, 4 and 5 without references. Anchoring flange 1 is made by the association of an outer support part 2 shaped noticeably in the form of an inverted "U", which has along each of its branches 3 a longitudinal opening 4 that is closed at the bottom by a barbed tooth 5. The two barbed teeth 5 are facing each other via their active obverse 5A and they protrude perpendicularly towards the inside of the outer support part 2. An inner pressing part 6, which is housed inside the outer support part 2, is also shaped like an inverted "U" and is made up of an arched head 7, which is applied in a sliding manner via its wings 7A to inner walls 3A of branches 3 of outer support part 2, and by two branches 8 which emerge from the centre of said wings 7A and which have a suitable width and length for sliding under guidance through longitudinal opening 4 of outer support part 2 and, at the end of their trajectory through said longitudinal opening 4, for overlapping at their ends on the passive reverse 5B of barbed teeth 5 of branches 3 of outer support part 2. This outer support part 2 is provided on its head 9 with a threaded, emerging bushing 10 for the rotary passage of a spindle 11 that drives the inner pressing part 6 and which is applied in a releasable manner by its inner end 11A to a cylindrical housing 12 arranged in a transverse channel 13 of arched head 7 of inner pressing part 6.

Outer support part 2 and inner pressing part 6 are made from a synthetic plastic material which is an electricity insulator and resistant to ambient corrosion, and which allows a slight elastic deformation in branches 3 and 8 of, respectively, outer support part 2 and inner pressing part 6. Head 9 of outer support part 2 is made rigid with brackets 14 arranged in said head 9 and between this head and threaded, emerging bushing 10. Also the intersection of branches 8 in arched head 7 of inner pressing part 6, is made rigid with brackets.

Spindle 11 is made from synthetic plastic material and is provided on its outer end 11 B with driving means and on its inner end 11A, with means for coupling to inner pressing part 6, consisting of said cylindrical housing 12 arranged in a transverse channel 13 of arched head 7 of inner pressing part 6.

Figures 4 and 5 show that the distance D1 between the active obverses 5A of barbed teeth 5 is equal to the smaller distance D2 between two juxtaposed holes 15 and 16 of a tray 17, and the width D3 of said holes 15 and 16 of tray 17 is equal to the sum of the thickness of the area preceding the barb 18 of barbed tooth 5 and the thickness of the ends of branches 8 of inner pressing part 6.

All the figures show that the driving means of spindle 11 are from the group comprising a diametral groove 19 for receiving a screw driver and a prismatic hexagonal faceted element 20 for receiving a key, being considered individually or in their possible technical combinations.

Cylindrical housing 12 arranged in transverse channel 13 of arched head 7 of inner pressing part 6 and inner end 11A of spindle 11 are provided with releasable mutual coupling means that allow the rotation of spindle 11 and prevent said spindle from accidentally separating from its housing in arched head 7 of inner pressing part 6, when it moves inversely to the pressing action.

As shown in Figures 3, 4 and 5, the distance D1 is slightly greater than the distance D2, and the distance between barbs 18 is less than the distance D2. These barbs 18 are allowed to enter holes 15 and 16 thanks to the elastic flexibility of branches 3, which leads to said barbs 18 separating in the interlocking operation in holes 15 and 16.

As can be appreciated in Figure 5, once inner pressing part 6 has sat on a conduction 21 carried on tray 17, thanks to the movement caused by the action of spindle 11, anchoring flange 1 cannot be withdrawn from said tray 17, unless spindle 11 is manoeuvred in the direction of raising inner pressing part 6.

## Claims

1. Anchoring flange (1) for conductions, for anchoring electrical conductions (21) carried in trays (17) the bottom of which is grooved or formed by a grid, made by the association of an outer support part (2) shaped noticeably like an inverted "U", which is provided along each of its two branches (3) with a longitudinal opening (4) that is closed at the bottom by a barbed tooth (5), and an inner pressing part (6) that is housed inside said outer support part (2), said inner pressing part (6) being shaped also as an inverted "U", consisting of an arched head (7) that is applied in a sliding manner via its wings to the inner walls (3A) of said branches (3) of outer support part (2), and of two branches (8) that slide under guidance along said longitudinal opening (4) of the outer support part (2) and, at the end of their trajectory, overlap at their ends on said barbed teeth (5) of branches (3) of outer support part (2), with said outer support part (2) being provided on its head (9) with a threaded, emerging bushing (10) for the rotary passage of a spindle (11) that drives said inner pressing part (6) and which is applied in a releasable manner by its inner end (11A) to a cylindrical housing (12) arranged in a transverse channel of said arched head (7) of inner pressing part (6),
**characterized in that** said barbed teeth (5) are facing each other via their active obverse (5A) and protrude in a perpendicular direction towards the inside of said outer support part (2), and **in that** said two branches (8) emerge in the centre of said wings (7A) and have a suitable width and length for sliding under guidance through said longitudinal opening (4) of outer support part (2) and, at the end of their trajectory through said longitudinal opening (4), overlap at their ends on the passive reverse (5B) of said barbed teeth (5) of branches (3) of outer support part (2).

2. Anchoring flange (1) according to claim 1, **characterized in that** said outer support part (2) and said inner pressing part (6) are made from a synthetic plastic material that is an electricity insulator and resistant to ambient corrosion, and which allows a slight elastic deformation in said branches (3, 8) of, respectively, said outer support part (2) and said inner pressing part (6), being made rigid with brackets (14) both said head (9) of the outer support part (2), said brackets (14) being arranged between said head (9) and said threaded, emerging bushing (10), and the intersection of branches (8) of said inner pressing part (6) in arched head (7) thereof.

3. Anchoring flange (1) according to claims 1 or 2, **characterized in that** said spindle (11) is made from synthetic plastic material and is provided on its outer end (11B) with driving means (19, 20) and on its inner end (11A) with means for coupling to said inner pressing part (6).

4. Anchoring flange (1) according to claim 3, **characterized in that** said driving means of spindle (11) are from the group comprising a diametral groove (19) for receiving a screwdriver and a prismatic hexagonal faceted element (20), considered either individually or in their possible technical combinations.

5. Anchoring flange according to any of the claims 1 to 4, **characterized in that** said cylindrical housing (12), arranged in the transverse channel of arched head (7) of inner pressing part (6), and inner end (11A) of said spindle (11) have releasable mutual coupling means that allow said spindle (11) to rotate and prevent it from separating accidentally from said cylindrical housing (12) when it moves inversely to the pressing action.

6. Anchoring flange (1) according to any of the claims 1 to 5, applied to a tray (17) carrying an electrical conduction (21), **characterized in that** the distance (D1) between active obverses (5A) of said barbed teeth (5) of branches (3) of outer support part (2) is equal to the smaller distance (D2) between two juxtaposed holes (15, 16) of said tray (17), and the width (D3) of said holes (15, 16) of tray (17) is equivalent to the sum of the thickness of the area preceding the barb (18) of said barbed tooth (5) and the thickness of the ends of branches (8) of said inner pressing part (6).

## Patentansprüche

1. Verankerungsflansch (1) für Leitungen zum Verankern elektrischer Leitungen (21), die in Wannen (17) geführt werden, von denen der Boden mit Schlitzen versehen oder durch ein Netz gebildet ist, der durch die Verbindung eines Außenstützteils (2), das wahrnehmbar wie ein umgekehrtes "U" geformt und entlang jeder seiner zwei Schenkel (3) mit einer Längsöffnung (4) versehen ist, die am unteren Ende durch einen mit einem Widerhaken versehenen Zahn (5) abgeschlossen ist, und eines innerhalb des Außenstützteils (2) angeordneten Innendruckteils (6) gebildet ist, wobei das Innendruckteil (6) ebenfalls als ein umgekehrtes "U" geformt ist, das aus einem bogenförmigen Kopf (7), der über seine Flügel in gleitender Weise zu den Innenwänden (3a) der Schenkel (3) des Außenstützteils (2) angebracht ist, und aus zwei Schenkeln (8) besteht, die unter Führung entlang der Längsöffnung (4) des Außenstützteils (2) gleiten und am Ende ihrer Bewegungsbahn an ihren Enden die mit Widerhaken versehenen Zähne (5) der Schenkel (3) des Außenstützteils (2) überlappen, wobei das Außenstützteil (2) an seinem Kopf (9) mit einer hervortretenden Gewindebuchse (10) für den Rotationsdurchgang einer Spindel (11) versehen ist, die den Innendruckteil (6) treibt und durch ihr inneres Ende (11a) lösbar an einem zylindrischen Gehäuse (12) angebracht ist, das in einem querverlaufenden Kanal des bogenförmigen Kopfs (7) des Innendruckteils (6) angeordnet ist,
**dadurch gekennzeichnet, dass** die mit Widerhaken versehenen Zähne (5) über ihre wirkende Vorderseite (5A) einander zugewandt sind und in einer senkrechten Richtung zur Innenseite des Außenstützteils (2) vorstehen, und dadurch, dass die zwei Schenkel (8) in der Mitte der Flügel (7a) hervortreten und ausreichend breit und lang sind, um unter Führung durch die Längsöffnung (4) des Außenstützteils (2) zu gleiten, und am Ende ihrer Bewegungsbahn durch die Längsöffnung (4) an ihren Enden die nicht wirkende Rückseite (5b) der mit Widerhaken versehenen Zähne (5) der Schenkel (3) des Außenstützteils (2) überlappen.

2. Verankerungsflansch (1) nach Anspruch 1, **dadurch gekennzeichnet, dass** das Außenstützteil (2) und das Innendruckteil (6) aus einem synthetischen Plastikmaterial sind, das ein elektrischer Isolator und widerstandsfähig gegen Umgebungskorrosion ist, und das eine leichte elastische Verformung in den Schenkeln (3, 8) des Außenstützteils (2) beziehungsweise des Innendruckteils (6) erlaubt, wobei sowohl der Kopf (9) des Außenstützteils (2) als auch der Schnittpunkt der Schenkel (8) des Innendruckteils (6) in dessen bogenförmigen Kopf (7) mit Klammern (14) versteift ist, wobei die Klammern (14) zwischen dem Kopf (9) und der hervortretenden Gewindebuchse (10) angeordnet sind.

3. Verankerungsflansch (1) nach Anspruch 1 oder 2, **dadurch gekennzeichnet, dass** die Spindel (11) aus einem synthetischen Plastikmaterial ist und an ihrem Außenende (11b) mit einem Treibmittel (19, 20) und an ihrem Innenende (11a) mit einem Mittel zur Kopplung des Innendruckteils (6) versehen ist.

4. Verankerungsflansch (1) nach Anspruch 3, **dadurch gekennzeichnet, dass** das Treibmittel der Spindel (11) eine diametrale Nut (19) zur Aufnahme eines Schraubenziehers und/oder ein prismatisches, sechseckig facettiertes Element (20) ist, das entweder individuell oder in ihren möglichen technischen Kombinationen vorgesehen ist.

5. Verankerungsflansch nach einem der Ansprüche 1 bis 4, **dadurch gekennzeichnet, dass** das zylindrische Gehäuse (12), das in dem querverlaufenden Kanal des bogenförmigen Kopfs (7) des Innendruckteils (6) angeordnet ist, und das Innenende (11a) der Spindel (11) gegenseitig lösbare Kopplungsmittel aufweisen, die der Spindel (11) ermöglichen zu rotieren und bei einer zum Druckvorgang inversen Bewegung diese daran hindern sich unbeabsichtigterweise von dem zylindrischen Gehäuse (12) zu lösen.

6. Verankerungsflansch (1) nach einem der Ansprüche 1 bis 5, der an einer eine elektrische Leitung (21) führende Wanne (17) angebracht ist, **dadurch gekennzeichnet, dass** der Abstand (D1) zwischen wirkenden Vorderseiten (5a) der mit Widerhaken versehenen Zähne (5) der Schenkel (3) des Außenstützteils (2) gleich dem kleineren Abstand (D2) zwischen zwei nebeneinanderliegenden Löchern (15, 16) der Wanne (17) ist, und die Breite (D3) der Löcher (15, 16) der Wanne (17) gleich der Summe der Dicke des den Widerhaken (18) vorausgehenden Bereichs des mit Widerhaken versehenen Zahns (5) und der Dicke der Enden der Schenkel (8) des Innendruckteils (6) ist.

## Revendications

1. Bride d'ancrage (1) pour des conducteurs, pour ancrer des conducteurs électriques (21) supportées dans des chemins de câbles (17) dont le fond est rainuré ou formé par une grille, constitués de l'association d'une partie de support extérieure (2) ayant principalement la forme d'un U inversé, qui est muni le long de chacune de ses deux branches (3) d'une ouverture longitudinale (4) qui est fermée au fond par une dent crantée (5), et d'une partie de pression intérieure (6) qui est logée à l'intérieur de ladite partie de support extérieure (2), ladite partie de pression intérieure (6) ayant également la forme d'un U inversé, composé d'une tête en arc (7) qui est appliquée d'une manière coulissante par l'intermédiaire de ses ailes sur les parois intérieures (3A) desdites branches (3) de la partie de support extérieure (2), et de deux branches (8) qui coulissent de manière guidée le long de ladite ouverture longitudinale (4) de la partie de support extérieure (2), et, à l'extrémité de leur trajectoire, recouvrent à leurs extrémités lesdites dents crantées (5) des branches (3) de la partie de support extérieure (2), ladite partie de support extérieure (2) étant munie sur sa tête (9) d'une douille filetée en saillie (10) pour permettre le passage rotatif d'une broche (11) qui entraîne ladite partie de pression intérieure (6) et qui est appliquée d'une manière amovible par son extrémité intérieure (11A) sur un logement cylindrique (12) disposé dans un canal transversal de ladite tête en arc (7) de ladite partie de pression intérieure (6),
**caractérisée en ce que** lesdites dents crantées (5) se font face par leur face active (5A) et font saillie dans une direction perpendiculaire vers l'intérieur de ladite partie de support extérieure (2), et **en ce que** lesdites deux branches (8) sortent au centre desdites ailes (7A) et ont une largeur et une longueur adaptées à un coulissement guidé à travers ladite ouverture longitudinale (4) de la partie de support extérieure (2) et, à l'extrémité de leur trajectoire à travers ladite ouverture longitudinale (4), recouvrent à leurs extrémités la face passive (5B) desdites dents crantées (5) des branches (3) de la partie de support extérieure (2).

2. Bride d'ancrage (1) selon la revendication 1, **caractérisée en ce que** ladite partie de support extérieure (2) et ladite partie de pression intérieure (6) sont constituées d'une matière plastique synthétique qui est un isolant électrique et résiste à une corrosion ambiante, et qui permet une légère déformation élastique desdites branches (3, 8) de ladite partie de support extérieure (2) et de ladite partie de pression intérieure (6) respectivement, rendues rigides par des supports (14) sur ladite tête (9) de la partie de support extérieure (2), lesdits supports (14) étant placés entre ladite tête (9) et ladite douille filetée en saillie (10), et l'intersection des branches (8) de ladite partie de pression intérieure (6) dans sa tête en arc (7).

3. Bride d'ancrage (1) selon la revendication 1 ou la revendication 2, **caractérisée en ce que** ladite broche (11) est constituée d'une matière plastique synthétique et est munie sur son extrémité extérieure (11B) d'un moyen d'entraînement (19, 20) et sur son extrémité intérieure (11A) d'un moyen de couplage à ladite partie de pression intérieure (6).

4. Bride d'ancrage (1) selon la revendication 3, **caractérisée en ce que** ledit moyen d'entraînement de la broche (11) appartient à un groupe comprenant une rainure transversale (19) destinée à recevoir un tournevis et d'un élément à facettes hexagonal prismatique (20), pris individuellement ou dans leurs combinaisons techniques possibles.

5. Bride d'ancrage selon l'une quelconque des revendications 1 à 4, **caractérisée en ce que** ledit logement cylindrique (12), disposé dans le canal transversal de la tête en arc (7) de la partie de pression intérieure (6), et l'extrémité intérieure (11A) de ladite broche (11) ont des moyens de couplage mutuel amovible qui permettent à ladite broche (11) de tourner et l'empêchent de se séparer accidentellement dudit logement cylindrique (12) quand elle se déplace dans le sens inverse de l'action de pression.

6. Bride d'ancrage (1) selon l'une quelconque des revendications 1 à 5, appliquée à un chemin de câbles (17) supportant un conducteur électrique (21), **caractérisée en ce que** la distance (D1) entre les faces actives (5A) desdites dents crantées (5) des branches (3) de la partie de support extérieure (2) est égale à la plus petite distance (D2) entre deux trous juxtaposés (15, 16) dudit chemin de câbles (17), et la largeur (D3) desdits trous (15, 16) du chemin de câbles (17) est équivalente à la somme de l'épaisseur de la zone précédant le cran (18) de ladite dent crantée (5) et de l'épaisseur des extrémités des branches (8) de ladite partie de pression intérieure (6).
